# EUROPÄISCHE PATENTSCHRIFT

(11) **EP 2 803 262 B1**
(45) Veröffentlichungstag und Bekanntmachung des Hinweises auf die Patenterteilung: **19.04.2017**
(21) Anmeldenummer: 14156301.5
(22) Anmeldetag: 24.02.2014
(51) Int. Cl.: A01K 1/00

(54) **Tierbehausung**
Animal housing
Logement pour animaux

(30) Priorität: 17.05.2013 DE 102013105140
(43) Veröffentlichungstag der Anmeldung: 19.11.2014
(73) Patentinhaber: Albert Kerbl GmbH, 84428 Buchbach (DE)
(72) Erfinder: Kerbl, Albert, 84428 Buchbach (DE)
(74) Vertreter: Kalkoff & Partner

(56) Entgegenhaltungen:
- EP-A1- 2 311 314
- EP-A1- 2 399 453
- EP-A1- 2 534 943
- US-A- 4 140 080
- US-B1- 6 691 644

## Beschreibung

Die Erfindung betrifft eine Tierbehausung mit
- einer eine Zugangsöffnung aufweisenden hüttenartigen Tierbox und
- einer zwischen einer Gebrauchsposition und einer Lagerungsposition verstellbar an der Tierbox gelagerten, in der Gebrauchsposition einen Auslauf im Bereich vor einer Zugangsöffnung der Tierbox umzäunenden Zauneinheit mit zwei im Abstand voneinander angeordneten Zaunelementen, die über einen Querträger miteinander verbunden sind.

Die Verwendung von Tierbehausungen zur Aufzucht von Kälbern im Außenklima erfreut sich zunehmender Beliebtheit. Gegenüber einer konventionellen Warmstallaufzucht weisen die unter Verwendung der Tierbehausungen im Außenklima aufgezogenen Tiere eine deutlich bessere Gesundheit auf, was unter anderem aus dem geringeren Keimdruck in der Außenluft sowie der niedrigeren Staub-, Ammoniak- und Wasserdampfkonzentration resultiert. Durch das dadurch reduzierte Infektionsrisiko für die Tiere, deren Abwehrkräfte gleichzeitig gesteigert werden, wird das Risiko von Aufzuchtverlusten in erheblichem Maße reduziert.

Tierbehausungen der eingangs genannten Art weisen dabei neben einer hüttenartigen Tierbox eine Zauneinheit auf, welche zur Umzäunung eines Auslaufs im Bereich vor einer Zugangsöffnung der Tierbox dient. Zur Erhöhung des Bedienkomforts ist es bereits aus der DE 601 05 340 T2 bekannt, die Zauneinheit zwischen einer Gebrauchsposition und einer Lagerungsposition verstellbar an der Tierbox anzuordnen. In der Gebrauchsposition grenzt die Zauneinheit dabei entsprechend ihrer Abmessungen einen Bereich vor der Zugangsöffnung der Tierbox ab, der von dem aufzuziehenden Tier als Auslauf genutzt werden kann. Zu Lagerungs- oder Transportzwecken ist die Zauneinheit in eine Lagerungsposition überführbar, in der die Zauneinheit platzsparend an der Tierbox angeordnet ist, wobei die Zaunelemente benachbart zu den Seitenflächen der Tierbox angeordnet sind. Die Zaunelemente der Zauneinheit sind im Abstand voneinander angeordnet und über einen im Bodenbereich - bezogen auf die Gebrauchsposition - angeordneten Querträger miteinander verbunden, so dass die Zaunelemente gemeinsam mit dem Querträger eine Ausnehmung bilden, die einen Zugang zum durch die Zauneinheit abgegrenzten Bereich ermöglicht.

Die Aufstellung der Tierbehausung kann grundsätzlich auf einem beliebigen Untergrund erfolgen. Neben einer Verwendung der Tierbehausung auf einem befestigten Untergrund, wobei dann bevorzugt der durch die Zauneinheit abgegrenzte Auslauf mit Stroh ausgestreut wird, besteht ferner die Möglichkeit, die Tierbehausung auch auf einem unbefestigten Untergrund anzuordnen. Bekannte Tierbehausungen weisen dabei den Nachteil auf, dass die Zauneinheiten gegenüber der Tierbox, bspw. durch das innerhalb der Umzäunung angeordnete Tier, bewegt werden kann. Mit zunehmender Größe des umzäunten Bereichs in der Gebrauchsposition kann dies zu einer Beschädigung der gelenkigen Aufnahme der Zauneinheit an der Tierbox bis hin zu einer Zerstörung der Verbindung führen.

Hiervon ausgehend liegt der Erfindung die Aufgabe zugrunde, eine Tierbehausung der eingangs genannten Art bereit zu stellen, welche in der Gebrauchsposition eine hohe Positions- und Standsicherheit der Zauneinheit aufweist.

Die Erfindung löst die Aufgabe durch eine Tierbehausung mit den Merkmalen des Anspruchs 1. Vorteilhafte Weiterbildungen der Erfindung sind in den abhängigen Ansprüchen angegeben.

Kennzeichnend für die erfindungsgemäße Tierbehausung ist, dass der Querträger derart mit den Zaunelementen verbunden ist, dass der Querträger in Höhenerstreckung der Zaunelemente betrachtet über die Unterkante der Zaunelemente vorsteht. Gemäß der Erfindung besteht die Zauneinheit dabei aus zumindest zwei Zaunelementen, welche durch den Querträger verbunden sind, der in der Gebrauchsposition im Wesentlichen horizontal verläuft. Der Anschluss des Querträgers an die Zaunelemente erfolgt dabei derart, dass der Querträger in der Gebrauchsposition über die Unterkante der Zaunelemente vorsteht. Im Rahmen der Erfindung wird dabei unter der Unterkante der Zaunelemente die Fläche verstanden, welche in der Gebrauchsposition der Zauneinheit auf dem Untergrund, auf dem die Tierbehausung aufgestellt wird, aufliegt. Erfindungsgemäß steht der Querträger - bezogen auf die Gebrauchsposition - über die Unterkante, d. h. in Richtung auf den Untergrund vor, was es ermöglicht, über den vorstehenden Teil des Querträgers die Zauneinheit im Untergrund, insbesondere unbefestigtem Untergrund, zu verankern, wodurch eine hohe Positionssicherheit der Zauneinheit in der Gebrauchsposition gewährleistet wird. Der vorstehende Querträger kann bspw. auch innerhalb einer auf einem befestigten Untergrund vorgesehene Bodenfuge angeordnet werden, so dass die Standsicherheit der Zauneinheit sowohl auf festem als auch auf losem Untergrund erhöht wird, wodurch Beschädigungen durch eine Verlagerung der Zauneinheit gegenüber der Tierbox in wirksamer Weise vermieden werden. Die Ausrichtung der Zauneinheit über hierfür vorgesehene Bodenfugen erleichtert zudem die Ausrichtung der Tierbehausungen zueinander.

Durch einen über den Querträger mit dem Untergrund hergestellten Formschluss zwischen der Zauneinheit und dem Untergrund besteht auch die Möglichkeit, gegenüber bekannten Tierbehausungen größere Ausläufe zu realisieren, da die ungünstigsten Falls auftretenden Lastmomente bei einer auf die Zauneinheit wirkenden Belastung aufgrund der Verankerung über den Querträger nicht auf die Tierbox übertragen werden. Wesentlich für die Erfindung ist dabei, dass der Querträger - bezogen auf die Höhenerstreckung der Zaunelemente in der Gebrauchsposition - über die Unterkante der Zaunelemente in Richtung auf den Untergrund vorsteht, wobei unter der Höhenerstreckung im Rahmen der Erfindung die Höhe des Zauns in der Gebrauchsposition, ausgehend von der auf dem Boden aufliegenden Unterkante bis zu einer Oberkante der Zaunelemente verstanden wird, welche üblicherweise durch vertikal verlaufende Querstreben gebildet wird.

Die erfindungsgemäße Ausgestaltung weist ferner den Vorteil auf, dass eine durch den Querträger sowie die im Abstand voneinander angeordneten Zaunelemente gebildete Ausnehmung der Zauneinheit einen ungehinderten Zugang zum Inneren des durch die Zauneinheit abgegrenzten Bereich ermöglicht, nachdem die Zauneinheit derart an dem Untergrund angeordnet werden kann, dass der Querträger in der Gebrauchsposition im Bereich der Ausnehmung im Wesentlichen vollständig unterhalb des Bodeniveaus angeordnet werden kann. Die Ausnehmung weist dabei, gemessen von der Oberkante des Querträgers bis zu einer Oberkante der Zaunelemente, zumindest die gleiche Höhe auf wie die Höhenerstreckung der Zaunelemente.

Ein vollständig barrierefreier Zugang zu dem durch die Zauneinheit in der Gebrauchsposition abgegrenzten Auslauf wird nach einer Weiterbildung der Erfindung insbesondere dadurch erreicht, dass die Unterseite der Zaunelemente - in deren Höhenerstreckung betrachtet - im Abstand von der Oberkante des Querträgers angeordnet ist. Durch diese Ausgestaltung der Erfindung ist in der Gebrauchsposition, in der die Unterkante der Zaunelemente auf dem Untergrund aufliegt, die Oberkante des Querträgers unterhalb des Bodenniveau des Untergrunds angeordnet, da die Ausnehmung gegenüber der Höhenerstreckung der Zaunelemente eine größere Höhe aufweist. Hierdurch wird zum einen eine besonders gute Lagesicherung der Zauneinheit gewährleistet und zum anderen wird sichergestellt, dass der Zugang zum durch die Zauneinheit abgrenzenden Bereich ohne eine hinderliche Stolperkante möglich ist. Hierdurch wird in besonderer Weise gewährleistet, dass weder Mensch noch Tier, welche durch die Ausnehmung hindurch treten, an einer Stolperkante hängen bleiben und sich dabei ggf. verletzen.

Die Ausgestaltung des die beiden Zaunelemente verbindenden Querträgers ist grundsätzlich frei wählbar. Nach einer besonders vorteilhaften Ausgestaltung der Erfindung ist jedoch vorgesehen, dass sich der Querträger von der Oberkante zu seiner Unterkante hin verjüngt. Durch diese Ausgestaltung der Erfindung wird insbesondere im Falle einer Anordnung der Tierbehausung auf einem unbefestigten Untergrund eine besonders zuverlässige Anordnung der Zauneinheit in der Gebrauchsposition erreicht, in der die Unterkante der Zaunelemente auf dem Untergrund aufliegen. Die sich verjüngende Form, welche auch nur auf bestimmte Abschnitte des Querträgers beschränkt sein kann, erlaubt dabei ein einfaches Eindringen des Querträgers in den unbefestigten Untergrund. Gleichzeitig erlaubt diese Ausgestaltung jedoch auch die Anordnung der Tierbehausung auf einem befestigten Untergrund in ggf. vorgesehenen Bodenfugen.

Nach einer besonders vorteilhaften Ausgestaltung der Erfindung ist ferner vorgesehen, dass der Querträger über die Unterkante der Zaunelemente vorstehende Verankerungselemente aufweist. Derartige Verankerungselemente, bspw. vorstehende Zapfen, welche eine beliebige Form aufweisen können, verbessern eine lagesichere Anordnung der Tierbehausung auf einem unbefestigten Untergrund in ergänzender Weise. Die Verankerungselemente gewährleisten dabei auch bei einem weichen oder aufgeweichten Untergrund eine zuverlässige Fixierung der Zauneinheit in der Gebrauchsposition relativ gegenüber der Tierbox.

Die Anbringung der Verankerungselemente an dem Querträger kann auch nachträglich durch den Landwirt erfolgen. Vorteilhafterweise weist der Querträger dabei zur Aufnahme der Verankerungselemente geeignete Aufnahmen auf, die bspw. ein Einstecken oder Anschrauben der Verankerungselemente in einfacher Weise ermöglichen, wodurch auch eine Festlegung der Länge möglich ist, mit der die Verankerungselemente von dem Querträger über die Unterkante vorstehen.

Zur Abgrenzung des durch die Zauneinheit abgegrenzten Auslaufs vor der Zutrittsöffnung der Tierbehausung kann die Ausnehmung grundsätzlich in beliebiger Weise durch geeignete Absperrmittel verschlossen werden. Nach einer besonders vorteilhaften Ausgestaltung der Erfindung ist jedoch vorgesehen, dass die durch die Zaunelemente und den Querträger bestimmte Ausnehmung mittels eines lösbar und gelenkig mit einem Zaunelemente verbindbaren Türelement verschließbar ist. Gemäß dieser Ausgestaltung der Erfindung kann das Türelement in einfacher Weise von dem Zaunelement abgenommen, bzw. an diesem angeordnet werden. Die gelenkige Anordnung erlaubt es dabei auch, die Ausnehmung nach Art einer Tür zu verschließen, wobei das Türelement dabei aus einer Verschlusslage in eine Öffnungslage verschwenkbar ist, in der ein weitestgehend ungehinderter Zutritt möglich ist.

Nach einer besonders vorteilhaften Ausgestaltung der Erfindung ist dabei vorgesehen, dass das Türelement außerhalb der Ausnehmung gelenkig mit einem Zaunelement verbunden ist. Gemäß dieser Ausgestaltung der Erfindung ist das Türelement nicht innerhalb der Ausnehmung angeordnet ist, wo das Türelement dann sowohl zum abgegrenzten Bereich wie auch zur Außenseite der Zauneinheit im Wesentlichen flächenbündig mit der Innen- und Außenseite der Zauneinheit abschließen würde. Stattdessen ist das Türelement derart gelenkig mit der Außenseite oder der Innenseite der Zauneinheit verbunden, dass das Türelement in der Schließlage an der Innenseite bzw. Außenseite der Zaunelemente anliegt. Das Türelement gelangt demnach weder in der Schließ- noch in der Öffnungslage in die Ausnehmung. Durch die flächige Anlage wird eine besonders zuverlässige Lagesicherung des Türelements in der Schließlage gewährleistet. Insbesondere eine Anordnung des Türelements derart, dass dieses in Richtung des abgegrenzten Auslaufs aufschwenkt und demnach in der Schließlage innenseitig an dem Zaunelement anliegt, gewährleistet, dass die Ausnehmung auch im Falle einer höheren Belastung, bspw. durch das innerhalb der Tierbehausung angeordnete Tier, in seiner Schließlage verbleibt.

Nach einer weiteren Ausgestaltung der Erfindung ist vorgesehen, dass die Tierbox zu einer die Zugangsöffnung verschließenden Aufnahme des Türelements ausgebildet ist. Durch diese Ausgestaltung der Erfindung kann das lösbar mit einem Zaunelement verbindbare Türelement auch dazu genutzt werden, um die Zugangsöffnung der Tierbehausung zu verschließen, bspw. falls es erforderlich ist, das für die Tierbehausung vorgesehene Tier innerhalb der Tierbehausung einzusperren. Auf die Verwendung einer weiteren Absperrung kann gemäß dieser Weiterbildung der Erfindung verzichtet werden, so dass insgesamt die Tierbehausung dadurch besonders kostengünstig hergestellt werden kann. Die Ausgestaltung der Aufnahme an der Tierbox kann dabei grundsätzlich in beliebiger Weise ausgebildet sein, wobei diese in einfachster Weise die Möglichkeit bietet, das Türelement im Bereich der Zugangsöffnung einzuhängen.

Um eine Ausrichtung der Tierbehausung sowie eine Lagerung der Tierboxen im Falle deren Nichtbenutzung zu erleichtern, ist nach einer vorteilhaften Ausgestaltung der Erfindung vorgesehen, dass an der Tierbox Rollen derart angeordnet sind, dass in der Lagerungsposition die Tierbehausung durch ein Anheben der auf dem Boden aufstehenden Zauneinheit verfahren werden kann. Gemäß dieser Ausgestaltung der Erfindung ist vorgesehen, dass in der Lagerungsposition, in der die Zauneinheit mit den Zaunelementen seitlich an der Tierbox anliegt, die auf dem Boden aufstehende Zauneinheit durch deren Anheben ein Aufstellen der Tierbox auf die Rollen bewirkt, so dass dann die Tierbehausung in einfacher Weise schubkarrenartig verlagert werden kann.

Zur Sicherung der Lagerungsposition bzw. zur Vermeidung eine Weitebewegung der Zauneinheit ausgehend von der Grundposition über die Lagerungsposition hinaus, können grundsätzlich beliebige Ausgestaltungen der Tierbox und der Zauneinheit vorgesehen werden. Nach einer besonders vorteilhaften Ausgestaltung der Erfindung ist jedoch vorgesehen, dass die Lagerungsposition durch eine an einer Anlagefläche der Tierbox anliegende Anlage der Zauneinheit festgelegt ist. Durch diese Ausgestaltung der Erfindung wird eine einfache Positionierung über die Zauneinheit und eine Anlagefläche der Tierbox erreicht, so dass auf weitere Sicherungsmittel verzichtet werden kann.

Ein Ausführungsbeispiel der Erfindung wird nachstehend mit Bezug auf die Zeichnungen erläutert. In den Zeichnungen zeigen:
- Fig. 1: eine perspektivische Ansicht einer Tierbehausung mit einer in einer Gebrauchsposition angeordneten Zauneinheit und einer durch ein Türelement verschlossenen Ausnehmung;
- Fig. 2: eine Seitenansicht der Tierbehausung von Fig. 1;
- Fig. 3: eine Vorderansicht der Tierbehausung von Fig. 1;
- Fig. 4: eine vergrößerte perspektivische Darstellung der Einzelheit A von Fig. 1;

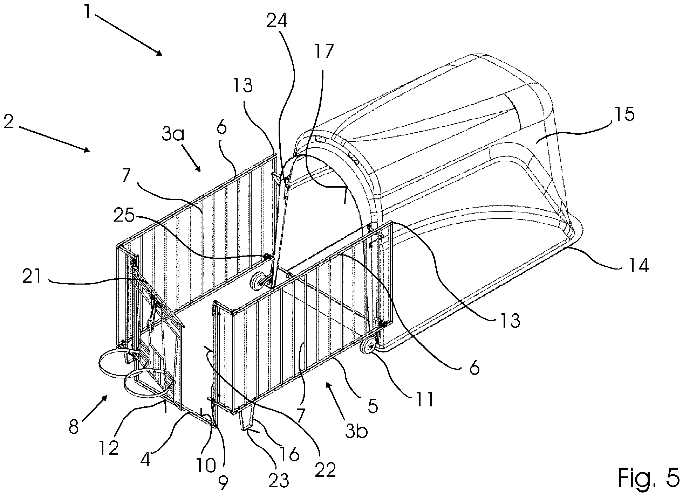

- Fig. 5: eine perspektivische Darstellung der Tierbehausung von Fig. 1 mit einem teilweise geöffnetem Türelement;
- Fig. 6: eine perspektivische Darstellung der Tierbehausung in der Lagerungsposition;
- Fig. 7: eine Seitenansicht der Tierbehausung von Fig. 6;
- Fig. 8: eine perspektivische Darstellung der Tierbehausung von Fig. 1 in der Lagerungsposition der Zauneinheit in einer Verfahrposition der Tierbehausung und
- Fig. 9: eine Seitenansicht der Tierbehausung von Fig. 8.

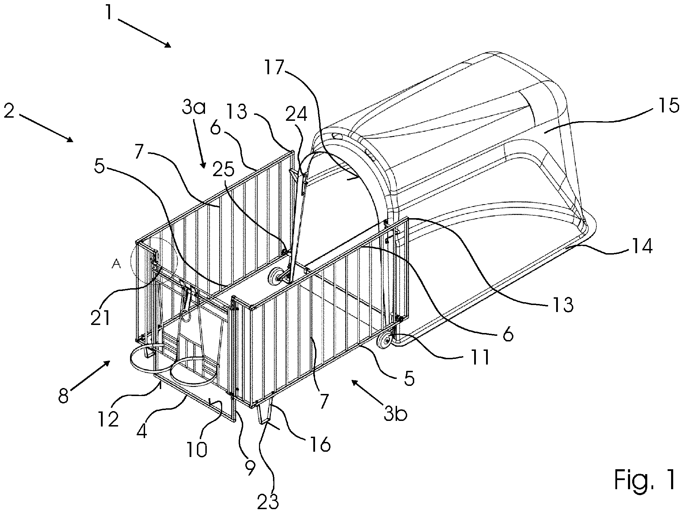

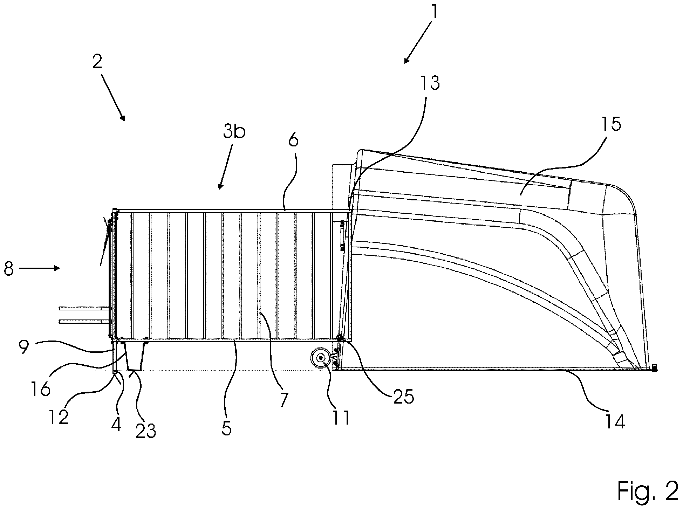

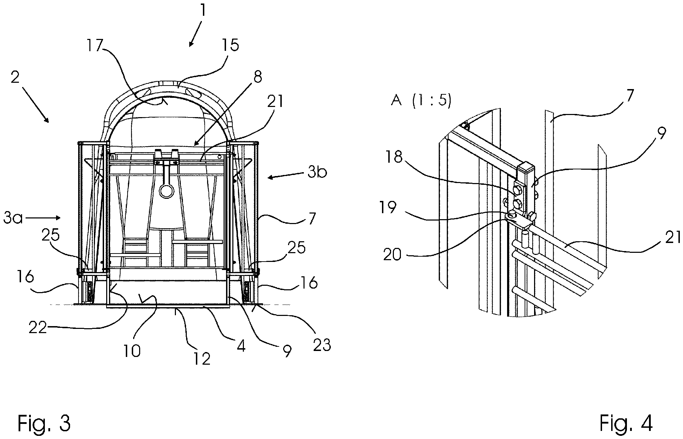

Eine in den Figuren 1 bis 4 in einer Gebrauchsposition angeordnete Tierbehausung 1 weist eine Tierbox 15 sowie eine gelenkig mit der Tierbox 15 verbundene Zauneinheit 2 auf. In der Gebrauchsposition grenzt die Zauneinheit 2 einen Bereich vor einer Zugangsöffnung 17 der Tierbox 15 ab und schafft somit einen Auslauf für das in der Tierbehausung 1 befindliche Tier.

Um in der Gebrauchsposition einen Zugang zu dem Auslauf zu ermöglichen, weist die Zauneinheit 2 zwei im Abstand voneinander angeordnete Zaunelemente 3a, 3b auf, welche über einen Querträger 4 miteinander verbunden sind. Der Querträger 4 erstreckt sich dabei zwischen zwei Anschlussstreben 9. Diese bilden jeweils den Abschluss eines Zwischenteils der Zaunelemente 3a, 3b, wobei die Zwischenteile jeweils senkrecht aufeinander zuweisend an den Bereich der Zaunelemente 3a, 3b anschließen, der in der Lagerungsposition seitlich neben der Tierbox 15 angeordnet ist.

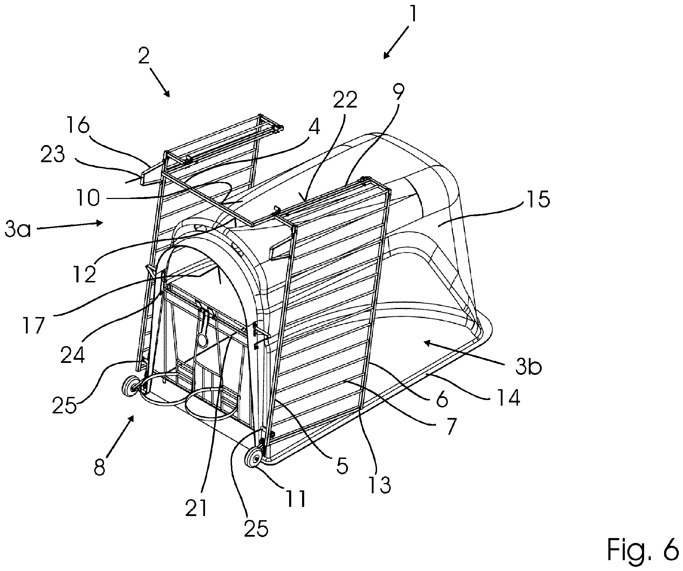

Die Zaunelemente 3a, 3b bilden mit dem Querträger 4 eine Ausnehmung 22, welche durch ein Türelement 8 verschließbar ist. Die so gebildete Zauneinheit 2 lässt sich aus der in Fig. 1 dargestellten Gebrauchsposition aufgrund ihrer drehgelenkigen Anordnung über mit der Tierbox verbundene Gelenkbolzen 25 aus der Gebrauchsposition in die in den Figuren 6 bis 9 dargestellte Lagerungsposition verschwenken, in der die Zaunelemente 3a, 3b platzsparend seitlich neben der Tierbox 15 angeordnet sind und somit eine lagerraumsparende Aufbewahrung ermöglichen.

Die Höhe der Zaunelemente 3a, 3b bestimmt sich nach deren Höhenerstreckung in der Gebrauchsposition, gemessen von deren Unterkante 23, welche durch die Fläche bestimmt wird, die in der dargestellten Gebrauchsposition auf einem Untergrund bzw. Boden aufliegt, bis zu einer Oberkante der den oberen Abschluss der Zaunelemente 3a, 3b bildenden oberen Querstreben 6. Die Unterkante 23 der dargestellten Zaunelemente 3a, 3b wird in dem dargestellten Ausführungsbeispiel durch eine - bezogen auf die Gebrauchsposition - Unterseite eines Fußkörpers 16 gebildet, welcher in einem unteren Eckbereich der Zaunelemente 3a, 3b mit unteren Querstreben 5 verbunden ist. Die Höhe der Zauneinheit 2 bestimmt sich somit durch den Abstand der oberen Querstrebe 6 der Zaunelemente 3a, 3b bis zum Untergrund, auf dem die Unterkante 23 der Zaunelemente 3a, 3b in der Gebrauchsposition aufsteht. Im vorliegenden Ausführungsbeispiel ist die Unterkante 23 dabei an dem Fußkörper 16 angeordnet. In einem hier nicht dargestellten Ausführungsbeispiel ohne Fußkörper 16 kann die Unterkante 23 jedoch auch durch die untere Strebe 5 gebildet sein, welche über vertikale Streben 7 mit der oberen Strebe 6 verbunden ist.

Die Zaunelemente 3a, 3b sind so ausgebildet, dass sie gegenüberliegend zu der Zugangsöffnung 17 der Tierbox 15 über den Querträger 4 miteinander verbunden sind, so dass der Querträger 4 mit den Abschlussstreben 9 der Zaunelemente 3a, 3b die Ausnehmung 22 bildet, welche in der Gebrauchsposition gegenüberliegend zur Zugangsöffnung 17 der Tierbox 15 angeordnet ist. Der Querträger 4 ist dabei derart mit den Abschlussstreben 9 verbunden, dass eine Oberkante 10 des Querträgers 4 - bezogen auf die Gebrauchsposition - unterhalb der Unterkante 23 der Zauneinheit 2 verläuft. Im Falle einer auf einem Boden aufliegenden Unterkante 23 der Zaunelemente 3a, 3b ist folglich die Oberkante 10 des Querträgers 4 unterhalb des Bodenniveaus angeordnet, so dass der Querträger 4 kein Hindernis bei einem Zutritt in den durch die Zauneinheit 2 abgegrenzten Bereich vor der Zugangsöffnung 17 der Tierbox 15 bildet. Die Ausnehmung 22 weist hierzu eine größere Höhe auf als die Höhenerstreckung der Zaunelemente 3a, 3b in der Gebrauchsposition.

Um die Ausnehmung 22 zu verschließen ist das Türelement 8 vorgesehen, welches lösbar und gelenkig mit dem Zaunelement 3a verbunden ist. Zur gelenkigen Verbindung ist dabei an der Abschlussstrebe 9 des Zaunelements 3a ein Anschlusskörper 18 angeschraubt, welcher einen vertikal vorstehenden Zapfen 19 aufweist, auf den eine Zapfenaufnahme 20 des Türelements 8 aufsteckbar ist. Ein weiterer Anschlusskörper sowie eine weitere Zapfenaufnahme an dem Türelement 8 ist - in Höhenerstreckung des Zaunelements 3a betrachtet - im unteren Bereich angeordnet, um so eine Verschwenkbarkeit des Türelements 8 zu ermöglichen. Das Türelement 8 ist dabei außenseitig, d. h. nicht innerhalb der Ausnehmung 22 an der Zauneinheit 2 angeordnet, so dass in der in den Figuren 1 bis 4 dargestellten Schließlage des Türelements 8 das Türelement 8 an der Außenseite des Zaunelements 3b anliegt.

Zur Verlagerung der Zauneinheit 2 in die Lagerungsposition wird die Zauneinheit 2 um die Gelenkbolzen 25 relativ zur Tierbox 15 verschwenkt, bis die Zaunelemente 3a, 3b mit ihren Eckbereichen 13 an einer die Tierbox 15 umlaufenden Falz 14 anliegen. In der Lagerungsposition sind die Zaunelemente 3a, 3b außenseitig an der Tierbox 15 angeordnet. Im Falle einer Anordnung der Zauneinheit 2 in der Lagerungsposition kann das Türelement 8 dazu genutzt werden, um die Zugangsöffnung 17 der Tierbox 15 zu verschließen. Hierzu weist die Tierbox 15 im Bereich der Zugangsöffnung 17 angeordnete Halterungen 24 auf, in welche das mehrere Türstreben 21 aufweisende Türelement 8 eingehängt werden kann.

Der Querträger 4 sichert mit seiner im Abstand von der Unterkante 23 der Zauneinheit 2 angeordneten Anordnung in der Gebrauchsposition, wobei dann sowohl Oberkante 12 wie auch Unterkante 10 des Querträgers 4 unterhalb der auf dem Boden aufstehenden Unterkante 23 der Zaunelemente 3a, 3b angeordnet sind, die Lage der Zauneinheit 2 gegenüber der Tierbox 15 und verhindert, dass es bei einer Belastung der Zauneinheit 2 zu einer Verlagerung der Zaunelemente 3a, 3b gegenüber der Tierbox 15 kommt, welche zu einem Ausreißen im Bereich der Gelenkbolzen 25 führen kann.

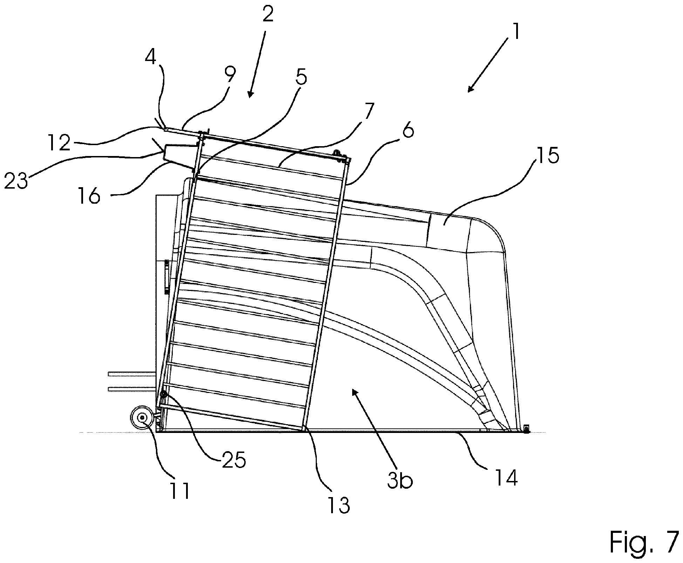

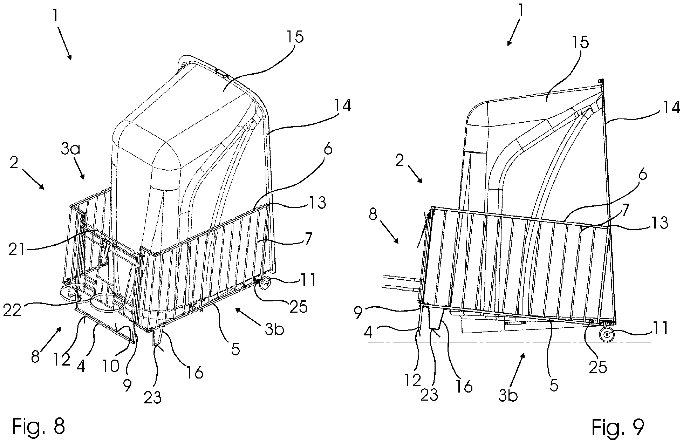

Zur Verlagerung der Tierbehausung 1 in der Lagerungsposition weist die Tierbox 15 zwei Rollen 11 auf, welche es ermöglichen, die Tierbehausung 1 zu verfahren. In der Lagerungsposition, in der die Zauneinheit 2 nicht wie in den Figuren 6 und 7 gegenüber einer auf dem Boden aufstehenden Tierbox 15 nach oben verschwenkt ist, sondern die Tierbox 15 gegenüber der auf dem Boden aufstehenden Zauneinheit 2 nach oben verschwenkt ist, ermöglicht ein Anheben der Zauneinheit 2 eine Verlagerung der Tierbehausung 1 nach Art einer Schubkarre, nachdem bei einem Anheben der Zauneinheit 2 die Tierbox 15 angehoben wird, so dass ein Kontakt mit dem Untergrund nur noch über die Rollen 11 besteht (vgl. Fig. 9).

### Bezugszeichenliste

- 1: Tierbehausung
- 2: Zauneinheit
- 3a, 3b: Zaunelemente
- 4: Querträger
- 5: untere Querstrebe
- 6: obere Querstrebe
- 7: vertikale Strebe
- 8: Türelement
- 9: Abschlussstrebe
- 10: Oberkante (Querträger)
- 11: Rollen
- 12: Unterkante (Querträger)
- 13: Eckbereich
- 14: Falz
- 15: Tierbox
- 16: Fußkörper
- 17: Zugangsöffnung
- 18: Anschlusskörper
- 19: Zapfen
- 20: Zapfenaufnahme
- 21: Türstrebe
- 22: Ausnehmung
- 23: Unterkante (Zaunelement)
- 24: Halterung
- 25: Gelenkbolzen

## Patentansprüche

1. Tierbehausung mit
- einer eine Zugangsöffnung (17) aufweisenden hüttenartigen Tierbox (15) und
- einer zwischen einer Gebrauchsposition und einer Lagerungsposition verstellbar an der Tierbox (15) gelagerten, in der Gebrauchsposition einen Auslauf im Bereich vor einer Zugangsöffnung (17) der Tierbox (15) umzäunenden Zauneinheit (2) mit zwei im Abstand voneinander angeordneten Zaunelementen (3a, 3b), die über einen Querträger (4) miteinander verbunden sind,
**dadurch gekennzeichnet, dass**
der Querträger (4) derart mit den Zaunelementen (3a, 3b) verbunden ist, dass in der Gebrauchsposition der Querträger (4) in Höhenerstreckung der Zaunelemente (3a, 3b) betrachtet über eine auf einem Boden aufliegende Unterkante (23) der Zaunelemente (3a, 3b) in Richtung auf den Boden vorsteht.

2. Tierbehausung nach Anspruch 1, **dadurch gekennzeichnet, dass** die Unterkante (23) der Zaunelemente (3a, 3b), in deren Höhenerstreckung betrachtet, im Abstand von einer Oberkante (10) des Querträgers (4) angeordnet ist.

3. Tierbehausung nach Anspruch 2, **dadurch gekennzeichnet, dass** sich der Querträger (4) von der Oberkante (10) zu seiner Unterkante (12) verjüngt.

4. Tierbehausung nach einem der vorhergehenden Ansprüche, **dadurch gekennzeichnet, dass** der Querträger (4) über die Unterkante (23) der Zaunelemente (3a, 3b) vorstehende Verankerungselemente aufweist.

5. Tierbehausung nach einer der vorhergehenden Ansprüche, **dadurch gekennzeichnet, dass** eine durch die Zaunelemente (3a, 3b) und den Querträger (4) abgegrenzte Ausnehmung (22) mittels eines lösbar und gelenkig mit einem Zaunelement (3a, 3b) verbindbaren Türelement (8) verschließbar ist.

6. Tierbehausung nach Anspruch 5, **dadurch gekennzeichnet, dass** das Türelement (8) außerhalb der Ausnehmung (22) gelenkig mit einem Zaunelement (3a, 3b) verbunden ist.

7. Tierbehausung nach Anspruch 5, **dadurch gekennzeichnet, dass** die Tierbox (15) zu einer die Zugangsöffnung (17) verschließenden Aufnahme des Türelements (8) ausgebildet ist.

8. Tierbehausung nach einem der vorhergehenden Ansprüche, **gekennzeichnet durch** derart an der Tierbox (15) angeordnete Rollen (11), dass in der Lagerungsposition der Zauneinheit (2) an der Tierbox (15) die Tierbehausung (1) **durch** ein Anheben der auf dem Boden aufstehenden Zauneinheit (2) Verfahren werden kann.

9. Tierbehausung nach einem der vorhergehenden Ansprüche, **dadurch gekennzeichnet, dass** die Lagerungsposition durch eine an einer Anlagefläche (14) der Tierbox (15) anliegende Anlage der Zauneinheit (2) festgelegt ist.

## Claims

1. An animal housing having
- a hut-like animal stall (15) having an access opening (17) and
- a fence unit (2) which is adjustably mounted on the animal stall (15) between a usage position and a storage position, said fence unit (2) enclosing a pen in the region in front of an access opening (17) of the animal stall (15) in the usage position and having two fence elements (3a, 3b) arranged at a distance from one another which are connected to one another by means of a crossmember (4),
**characterized in that**
the crossmember (4) is connected to the fence elements (3a, 3b) such that in the usage position the crossmember (4), when viewed in the vertical extension of the fence elements (3a, 3b), projects beyond a lower edge (23) of the fence elements (3a, 3b) resting on a bottom in the direction of the bottom.

2. The animal housing according to Claim 1, **characterized in that** the lower edge (23) of the fence elements (3a, 3b), when viewed in the vertical extension thereof, is arranged at a distance from an upper edge (10) of the crossmember (4).

3. The animal housing according to Claim 2, **characterized in that** the crossmember (4) is tapered from the upper edge (10) to its lower edge (12).

4. The animal housing according to any one of the preceding claims, **characterized in that** the crossmember (4) comprises anchoring elements which project beyond the lower edge (23) of the fence elements (3a, 3b).

5. The animal housing according to any one of the preceding claims, **characterized in that** a recess (22) delimited by the fence elements (3a, 3b) and the crossmember (4) can be closed by means of a door element (8) which can be articulated to a fence element (3a, 3b) in a detachable manner.

6. The animal housing according to Claim 5, **characterized in that** the door element (8) is articulated to a fence element (3a, 3b) outside the recess (22).

7. The animal housing according to Claim 5, **characterized in that** the animal stall (15) is configured to form a receptacle of the door element (8) which closes the access opening (17).

8. The animal housing according to any one of the preceding claims, **characterized by** rollers (11) arranged on the animal stall (15) such that in the storage position of the fence unit (2) on the animal stall (15) the animal housing (1) can be moved by means of raising the fence unit (2) standing on the bottom.

9. The animal housing according to any one of the preceding claims, **characterized in that** the storage position is secured by an installation of the fence unit (2) lying in contact with a contact surface (14) of the animal stall (15).

## Revendications

1. Logement pour animaux, avec
- une cage (15) du type cabane présentant une ouverture d'accès (17), et
- une unité de clôture (2), supportée sur la cage (15) de façon réglable entre une position d'utilisation et une position d'entreposage, qui, dans la position d'utilisation, enclôt un enclos dans la zone devant une ouverture d'accès (17) de la cage (15), avec deux éléments de clôture (3a, 3b) disposés de façon espacée l'un de l'autre qui sont raccordés l'un à l'autre par le biais d'une entretoise (4),
**caractérisé en ce que**
l'entretoise (4) est raccordée aux éléments de clôture (3a, 3b) de telle sorte que, dans la position d'utilisation, l'entretoise (4), vue dans l'extension en hauteur des éléments de clôture (3a, 3b), dépasse, en direction du sol, d'une arête inférieure (23) des éléments de clôture (3a, 3b) qui repose sur un sol.

2. Logement pour animaux selon la revendication 1, **caractérisé en ce que** l'arête inférieure (23) des éléments de clôture (3a, 3b), vue dans leur extension en hauteur, est disposée à distance d'une arête supérieure (10) de l'entretoise (4).

3. Logement pour animaux selon la revendication 2, **caractérisé en ce que** l'entretoise (4) se rétrécit à partir de l'arête supérieure (10) vers son arête inférieure (12).

4. Logement pour animaux selon l'une des revendications précédentes, **caractérisé en ce que** l'entretoise (4) présente des éléments d'ancrage dépassant de l'arête inférieure (23) des éléments de clôture (3a, 3b).

5. Logement pour animaux selon l'une des revendications précédentes, **caractérisé en ce qu'**une cavité (22) délimitée par les éléments de clôture (3a, 3b) et l'entretoise (4) peut être fermée au moyen d'un élément de porte (8) pouvant être raccordé à un élément de clôture (3a, 3b) de façon détachable et articulée.

6. Logement pour animaux selon la revendication 5, **caractérisé en ce que** l'élément de porte (8) est, à l'extérieur de la cavité (22), raccordé de façon articulée à un élément de clôture (3a, 3b).

7. Logement pour animaux selon la revendication 5, **caractérisé en ce que** la cage (15) est constituée pour une réception de l'élément de porte (8) fermant l'ouverture d'accès (17).

8. Logement pour animaux selon l'une des revendications précédentes, **caractérisé par** des roulettes (11) disposées sur la cage (15) de telle sorte que, dans la position d'entreposage de l'unité de clôture (2) sur la cage (15), le logement pour animaux (1) peut être déplacé par un soulèvement de l'unité de clôture (2) située sur le sol.

9. Logement pour animaux selon l'une des revendications précédentes, **caractérisé en ce que** la position d'entreposage est immobilisée par une installation de l'unité de clôture (2) de façon adjacente à une surface d'appui (14) de la cage (15).
